Europäisches Patentamt

European Patent Office

Office européen des brevets

(19)

(11) **EP 0 709 709 A1**

(12) **EUROPEAN PATENT APPLICATION**

(43) Date of publication:
01.05.1996 Bulletin 1996/18

(51) Int. Cl.⁶: $G02B\ 27/01$

(21) Application number: 95115111.7

(22) Date of filing: 26.09.1995

(84) Designated Contracting States:
DE FR GB SE

(30) Priority: 30.09.1994 US 316145

(71) Applicant: **Hughes Aircraft Company**
Los Angeles, California 90045-0066 (US)

(72) Inventors:
• **Wu, Ning**
Rancho Palos Verdes, California 90275 (US)

• **Hegg, Ronald G.**
Vista, California 92083 (US)
• **Ferrer, John J.**
Tehachape, California 93561 (US)

(74) Representative: **Gahlert, Stefan, Dr.-Ing. et al**
Witte, Weller, Gahlert, Otten & Steil,
Patentanwälte,
Rotebühlstrasse 121
D-70178 Stuttgart (DE)

(54) **Off-axis head-up display system employing a toric combiner**

(57) An off-axis head-up display system (10) is disclosed that may be used in a vehicle (11) that projects a virtual image for viewing by an operator (17). The head-up display system (10) has a folding plane that is at a skewed angle relative to the eyes of the operator (17). The system (10) comprises a display source (16) that is disposed adjacent a roof of the vehicle (11) and above the operator (17), and a toric combiner (14) for displaying a virtual image in front of the vehicle (11). The toric combiner (14) provides for acceptable optical performance for the system (10). The toric combiner (14) comprises a toric surface having two orthogonal axes that respectively have different radii of curvature along the respective axes.

FIG. 1

## Description

### BACKGROUND

The present invention relates generally to head-up display systems, and more particularly, to an off-axis head-up display system employing a toric combiner.

The assignee of the present invention designs and develops head-up displays for use in commercial vehicles, such as police cars and delivery vans, for example. The packaging constraints for mounting the head-up displays in these vehicles requires that the head-up display operate with its image projector disposed at a skewed off-axis angle relative to the drive's eyes.

A conventional optical combiner is disclosed in U.S. Patent No. 5,028,119 entitled "Aircraft Head-Up display", assigned to the assignee of the present invention. The aircraft head-up display disclosed in U.S. Patent No. 5,028,119 uses a concave spherical combiner to provide a virtual image for a head-up display system. The head-up display system comprises an image projector and a combiner that are used to project a virtual image that is observed by an observer. In the aircraft head-up display disclosed in U.S. Patent No. 5,028,119, the orientations of a folding plane (the plane formed by a ray travelling from the center of the image source projector to the center of the combiner to the center of the observer's eyes) is either vertical to the observer's eyes.

If the folding plane is oriented in a skewed angle relative to the observer's eyes, then a head-up display having a spherical combiner, such as the aircraft head-up display disclosed in U.S. Patent No. 5,028,119, for example, will not provide acceptable optical performance, and in particular, binocular disparity is excessive. In the case where the folding plane is oriented in a skewed angle relative to the observer's eyes, a general aspheric combiner has been used to correct for optical aberrations in a manner such as is described in U.S. Patent No. 4,973,139 entitled "Automotive Head-Up Display", assigned to the assignee of the present invention. The use of the general aspheric combiner in a head-up display does not provide a low cost solution.

Therefore, it is an objective of the present invention to provide for a head-up display and a low-cost optical combiner whose folding plane is at a skewed angle relative to the observer's eyes that provides acceptable optical performance of the head-up display.

### SUMMARY OF THE INVENTION

In order to meet the above and other objectives, the present invention comprises an off-axis head-up display system that employs a toric combiner. The head-up display system may be used in a vehicle having a windshield, a passenger compartment, and a roof. The head-up display system projects a virtual image for viewing by an operator of the vehicle. The head-up display system has a folding plane that is at a skewed angle relative to the eyes of the operator. The system comprises a display source that is disposed in the passenger compartment adjacent the roof of the vehicle and above the operator of the vehicle, and a toric combiner for displaying a virtual image in front of the windshield of the vehicle.

It has been discovered that using the toric combiner in a head-up display whose folding plane is at a skewed angle relative to the observer's eyes provides acceptable optical performance compared with conventionally-used combiners. The present toric combiner comprises a toric surface having two orthogonal axes that respectively have different radii of curvature along the respective axes.

Because the toric combiner has a toric surface, it is also relatively easy to fabricate and test compared to a combiner having comparable general aspheric surface. A conventional spherical combiner does not provide acceptable optical performance. A general aspheric combiner in a head-up display is not a low cost solution.

### BRIEF DESCRIPTION OF THE DRAWINGS

The various features and advantages of the present invention may be more readily understood with reference to the following detailed description taken in conjunction with the accompanying drawing, wherein like reference numerals designate like structural elements, and in which:

Fig. 1 shows a top view of an embodiment of a head-up display system in accordance with the principles of the present invention;
Fig. 2 shows a side view of the head-up display system of Fig. 1;
Fig. 3 shows a toric combiner employed in the head-up display system of Fig. 1;
Figs. 4 and 5 show diagrams illustrative of two toric surfaces that may be used to form the toric combiner of Fig. 3; and
Figs. 6 and 7 show details of the toric combiner of Fig. 3.

## DETAILED DESCRIPTION

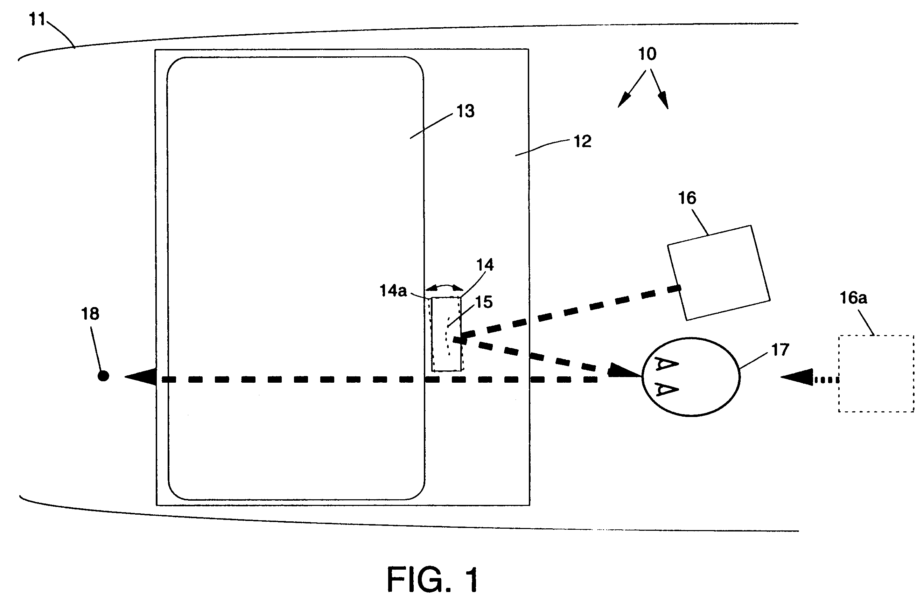

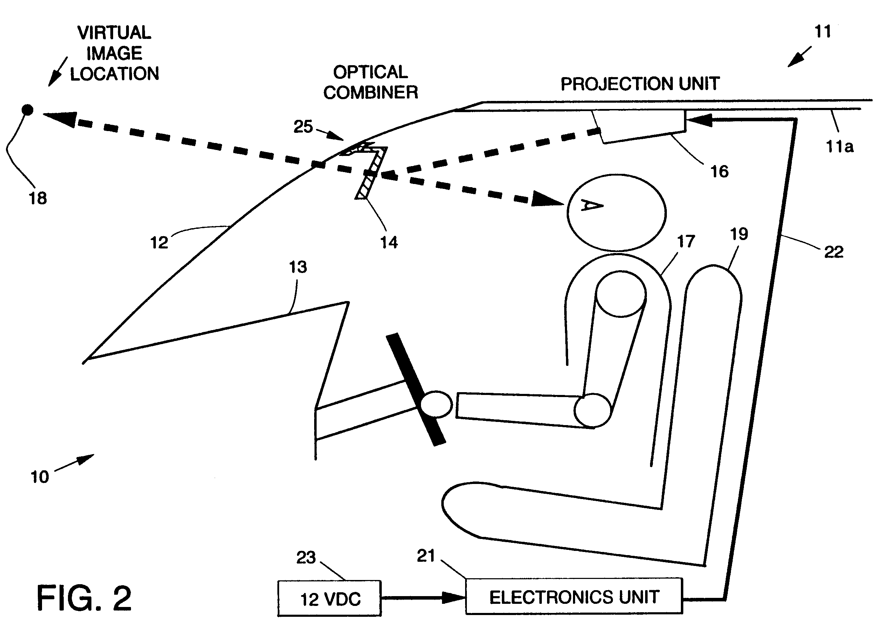

Referring to the drawing figures, Figs. 1 and 2 show top and side views, respectively, of a head-up display system 10 in accordance with the principles of the present invention. Figs. 1 and 2 show a vehicle 11 having a passenger compartment and a roof 11a, and having a vehicle operator 17 occupying a seat 19 in a position to operate the vehicle 11. The vehicle 11 has a windshield 12 and a dashboard 13 that are conventional, and do not form part of the present systems 10.

A projection unit or image display source 16 is attached to the roof 11a of the vehicle 11. The image display source 16 is disposed off-axis relative to the line of sight of the operator 17, and is shown having solid lines. The image display source 16 is thus disposed at an angle relative to the operator's forward viewing direction. The image display source 16 is coupled to an electronics unit 21 by way of a cable 22. The electronics unit 21 is coupled to a battery 23 of the vehicle 11. The electronics unit 21 is adapted to control the display source 16 in order to couple signals for projection thereby. The electronics unit 21 may be adapted to cause the image display source 16 to project different types of image data including sensor and communications data, such as ar provided by radar systems, computers, or modems, for example, or may project such image data as fuel and temperature gages, or other operating conditions of the vehicle 11, for example.

In the overhead head-up display systems 10 shown in Figs. 1 and 2, a toric optical combiner 14 is employed. The toric combiner 14 is shown attached to the windshield 12, by means of a ball and socket connection 25, for example. The toric combiner 14 is angularly adjustable with respect to the display source 16 and the operator 17 of the vehicle 11 to accommodate operators 17 with different heights and that sit in different locations relative to the toric combiner 14. The toric combiner 14 may be attached to the roof 11a, the windshield 12 (as is shown in the drawing figures) or the dashboard 13 (mounting provisions not shown).

The image display source 16 may comprise a cathode ray tube (CRT), a vacuum fluorescent display (VFD) or a liquid crystal display (LCD). Such image display sources 16 are currently available and may be readily employed in the present system 10. In an embodiment of the present invention that has been reduced to practice, a model RUNTK0180CEZZ manufactured by Sharp was employed. The toric combiner 14 may be made from optical grade glass or plastic depending upon the application. Optical coatings or films may be disposed on the toric combiner 14 to enhance the image brightness seen by the operator 17. In the embodiment of the present invention that has been reduced to practice, the toric combiner 14 is made of polycarbonate, and it has a concave surface is coated with a broadband visible coating, and a convex surface coated with magnesium fluoride antireflective coating. The mathematical equation defining the concave surface is well-understood by optical designers and is given by:

$$Z = - (Rx - \sqrt{(RY - \Delta)^2 - X^2}), \text{ where } \Delta = \frac{Y^2}{Ry - \sqrt{+ Ry^2 - Y^2}}..$$

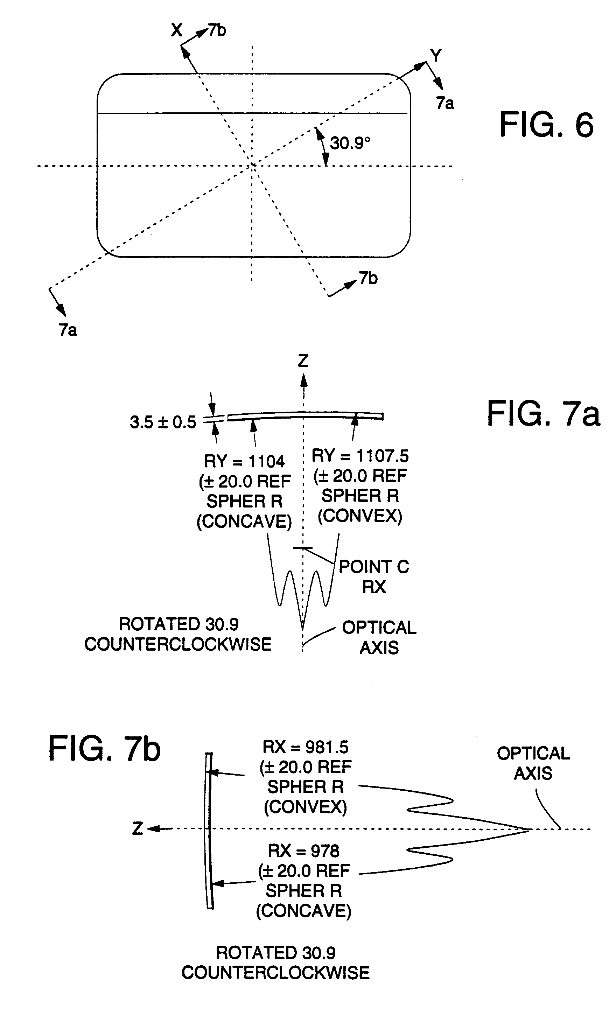

In general, the convex surface may be constructed such that the thickness of the combiner 14 is constant. The convex surface of the toric combiner 14 does not influence the image of the image display source 16. The requirement for the surface shape of the convex side of the toric combiner 14 is that it should not cause any see-through distortion. In the display system 10 that was reduced to practice, the convex surface shape was chosen to form a concentric toric surface with respect to the concave toric surface. The toric surface radii for the convex surface are increased by the thickness of the combiner 14 from the respective toric radii of the concave toric surface. Figs. 6, 7a and 7b show drawings of the toric combiner 14 and illustrate the respective radii of curvature and orientation thereof.

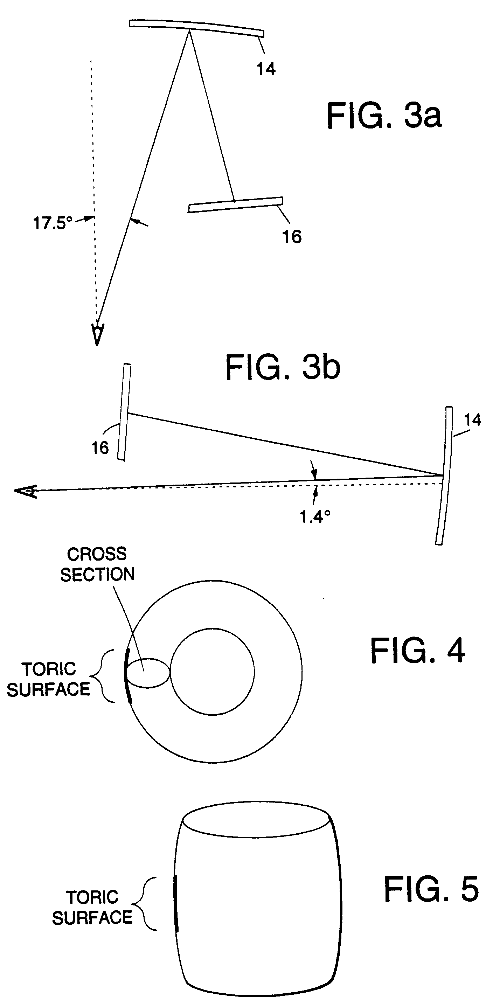

For a head-up display system, such as the present system 10, that requires the folding plane to be oriented at a skewed angle from the observer's eyes, as shown in Fig. 3, a spherical combiner cannot provide acceptable optical performance. Acceptable optical performance is achieved using the toric combiner 14. For the purposes of this disclosure, it is to be understood that a combiner is an optical element that does not obscure the vision of an observer, such as happens with a partially reflective mirror, for example. The toric combiner 14 is a combiner with a toric surface has two orthogonal axes with two different radii of curvature associated with the two axes. A toric surface may be shaped as a portion of a doughnut-shaped optical element or a barrel-shaped optical elements is shown in Figs. 4 and 5. The toric combiner 14 used in the head-up display has one of the axes lying in the folding plane.

The toric combiner 14 shown in Figs. 6 and 7 is defined as follows. The coordinate system is defined by (y,x,z) and the eye position is at (0,0,0). The center of the toric combiner is at (13,-155,492). The center of the image source is at (138,-275,117.6). The line-of-sight look-up angle is 1.4° and the look-over angle is 17.5°.

The drawings of the toric combiner 14 illustrated in Figs. 6 and 7 show that the orientation of the useful area of the combiner 14 is 30.9° from one of the toric axes. In this case the y-axis of the toric surface lies in the folding plane formed by the optical axis and of the toric combiner 14 and the center of the eyes of an observer, such as the vehicle operator 17 shown in Fig. 1.

Thus there has been described a new and improved off-axis head-up display system employing a toric combiner. It is to be understood that the above-described embodiment is merely illustrative of some of the many specific embodiments that represent applications of the principles of the present invention. Clearly, numerous and other arrangements can be readily devised by those skilled in the art without departing from the scope of the claims.

## Claims

1. A head-up display system (10) for use in a vehicle (11) having a windshield (12), for projecting a virtual image for viewing by an operator (17) of the vehicle (11), and wherein the head-up display system (10) has a folding plane that is at a skewed angle relative to the eyes of the operator (17), said system (10) comprising:
   a display source (16) for projecting said virtual image; and
   a combiner (14) for displaying said virtual image in front of the windshield (12) of the vehicle (11), characterized in that said combiner (14) is a toric combiner.

2. The head-up display system (10) of claim 1, characterized in that said display source (16) is disposed in a passenger compartment of the vehicle (11) and adjacent a roof (11a) of the vehicle (11) above an operator (17) of the vehicle (11).

3. The head-up display system (10) of claim 1 or 2, characterized in that the display source (16) is disposed off-axis and at an angle relative to a forward viewing direction of the operator (17).

4. The head-up display system (10) of any of claims 1 to 3, characterized in that the display source (16) is disposed on an inside surface of the roof (11a) of the vehicle (11).

5. The head-up display system (10) of any of claims 1 to 4, characterized in that the toric combiner (14) is disposed on the inside surface of the roof (11a), the windshield (12) or on a dashboard of the vehicle (11).

6. The head-up display system (10) of claims 1 to 5, characterized in that the toric combiner (14) comprises a toric surface having two orthogonal axes with two different radii of curvature associated with the two respective orthogonal axes.

7. The head-up display system (10) of claim 6, characterized in that the toric combiner (14) comprises a portion of a doughnut-shaped optical element.

8. The head-up display system (10) of claim 6, characterized in that the toric combiner (14) comprises a portion of a barrel-shaped optical element.

9. The head-up display system (10) of any of claims 6 to 8, characterized in that the toric combiner (14) has one of its orthogonal axes lying in the folding plane.

FIG. 1

VIRTUAL
IMAGE
LOCATION

OPTICAL
COMBINER

PROJECTION UNIT

11

11a

25

16

18

12

14

A

17

19

22

13

10

23

21

12 VDC

ELECTRONICS UNIT

FIG. 2

EP 0 709 709 A1

6

FIG. 3a

FIG. 3b

CROSS
SECTION

TORIC
SURFACE

FIG. 4

TORIC
SURFACE

FIG. 5

X ⟋7b

Y

7a

30.9°

**FIG. 6**

7b

7a

Z

3.5 ± 0.5

**FIG. 7a**

RY = 1104
(± 20.0 REF
SPHER R
(CONCAVE)

RY = 1107.5
(± 20.0 REF
SPHER R
(CONVEX)

POINT C
RX

ROTATED 30.9
COUNTERCLOCKWISE

OPTICAL
AXIS

**FIG. 7b**

RX = 981.5
(± 20.0 REF
SPHER R
(CONVEX)

OPTICAL
AXIS

Z

RX = 978
(± 20.0 REF
SPHER R
(CONCAVE)

ROTATED 30.9
COUNTERCLOCKWISE

**European Patent Office**

## EUROPEAN SEARCH REPORT

Application Number

EP 95 11 5111

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 026 641 (BOSSERMAN DAVID A ET AL) 31 May 1977 * column 1, line 59 - column 3, line 10; figures 1-3 * | 1,3,6-9 | G02B27/01 |
| A | DE-B-20 09 798 (PILKINGTON P E) 9 October 1975 * column 3, line 23 - column 4, line 65; figures 1,2 * | 1-8 | |
| A | WO-A-93 02377 (HUGHES AIRCRAFT CO) 4 February 1993 * column 6, line 4 - column 7, line 16; figure 1 * | 1 | |
| A | WO-A-94 08264 (HUGHES AIRCRAFT CO) 14 April 1994 * page 4, line 5 - page 5, line 4; figures 1,2 * | 1-5 | |
| | | | TECHNICAL FIELDS SEARCHED (Int.Cl.6) G02B |

The present search report has been drawn up for all claims

| Place of search | Date of completion of the search | Examiner |
|---|---|---|
| BERLIN | 2 February 1996 | von Moers, F |